# EUROPÄISCHE PATENTANMELDUNG

(11) **EP 2 037 145 A2**
(43) Veröffentlichungstag der Anmeldung: **18.03.2009**
(21) Anmeldenummer: 08163361.2
(22) Anmeldetag: 01.09.2008
(51) Int. Cl.: F16D 25/08

(54) **Betätigungseinrichtung**

(30) Priorität: 14.09.2007 DE 102007043971
(71) Anmelder: ZF Friedrichshafen AG, 88038 Friedrichshafen (DE)
(72) Erfinder: Ester, Barbara, 97421, Schweinfurt (DE); Mader, Gottfried, 97500, Ebelsbach (DE)

(57) **Zusammenfassung**

Betätigungseinrichtung insbesondere für eine Fahrzeugkupplung, umfassend einen Zylinder (3), in dem ein Kolben (5) in Abhängigkeit einer Druckmittelversorgung eine Betriebsbewegung ausführt, wobei zumindest ein Kontaktbereich zwischen dem Zylinder (3) und dem Kolben (5) mit einer reibkraftreduzierenden Schmiermittelbeigabe versehen ist, und der Kontaktbereich an einen Schmiermittelvorratsraum (29) angeschlossen ist, über den der Kontaktbereich mit Schmiermittel versorgbar ist.

## Beschreibung

Die Erfindung betrifft eine Betätigungseinrichtung gemäß dem Oberbegriff von Patentanspruch 1.

Eine mittels Fremdenergie gespeiste Betätigungseinrichtung für eine Fahrzeugkupplung verfügt über einen Kolben, der in einem Zylinder eine Betriebsbewegung auf die Fahrzeugkupplung ausübt. Zur Verhinderung von Leckagen ist zwischen dem Kolben und dem Zylinder mindestens eine Dichtung angeordnet. Des Weiteren wird der Kontaktbereich zwischen dem Kolben und dem Zylinder mit einer Schmiermittelbeigabe versehen, die für die gesamte Lebensdauer bestimmt ist. Ggf. kann eine Führungsfläche auch mit taschenförmigen Vertiefungen ausgeführt sein, um Schmiermittelanteile aufzunehmen, wie in der DE 198 11 657 A1 offenbart ist. Aber schon in der DE 37 12 248 A1 wird auf das Problem aufmerksam gemacht, dass eine Schmierung einer Betätigungseinrichtung über die gesamte Lebensdauer betrachtet, sehr schwierig ist. Eine Lösungsmöglichkeit wird u. a. darin gesehen, dass man die Kontaktflächen mit einer speziellen Oberflächenbeschichtung versieht, DE 103 23 953 A1. Die Oberflächenbeschichtung ist jedoch kostenbehaftet.

Die Aufgabe der vorliegenden Erfindung besteht, darin bei einem Betätigungssystem über die gesamte Nutzungsdauer eine ausreichende Schmierung von reibungsbehafteten Kontaktstellen zu gewährleisten.

Erfindungsgemäß wird die Aufgabe dadurch gelöst, dass der Kontaktbereich an einen Schmiermittelvorratsraum angeschlossen ist, über den der Kontaktbereich mit Schmiermittel versorgbar ist.

Der große Vorteil der Erfindung besteht darin, dass ein deutlich größerer Schmiermittelvorrat angelegt werden kann, da dessen Volumen nicht vom Bauraum unmittelbar im Kontaktbereich abhängig ist.

Bei einer ersten Ausführungsform weist der Schmiermittelvorratsraum mindestens eine bewegliche Wandung auf, die bei einer Kraftbeaufschlagung Schmiermittel in den Kontaktbereich fördert. Man nutzt den Arbeitsdruck in/an der Betätigungseinrichtung als Pumpantrieb aus, wobei die "Pumpe" von der beweglichen Wandung gebildet wird.

Dabei kann die Wandung elastisch ausgeführt ist, z. B. mit einer Gummi- oder Elastomermembran oder die Wandung wird von einem Trennkolben gebildet.

Bei einer Fahrzeugkupplung tritt der Effekt auf, dass sich ein Endpunkt der Betriebsbewegung des Kolbens der Betätigungseinrichtung mit zunehmendem Verschleiß der Fahrzeugkupplung in Richtung Boden des Zylinders verlagert. Dieser Effekt wird ausgenutzt, indem die Wandung in Abhängigkeit der Kolbenstellung beaufschlagt wird.

Zum Schutz aber auch zur optimalen Bauraumausnutzung ist der Schmiermittelvorratsraum in einem mit Druckmittel gefüllten Arbeitsraum angeordnet.

Für die Ansteuerung der Wandung des Schmiermittelvorratsraums sind zahlreiche Lösungen denkbar. So kann z. B. der Zylinder mit einem Stößel ausgeführt sein, der auf die Wandung einwirkt.

Zum Ausgleich etwaiger Fertigungstoleranzen ist es vorteilhaft, wenn der Stößel in seinem Einsatzpunkt einstellbar ist.

Grundsätzlich sinnvoll ist es, wenn der Stößel an einem Boden des Zylinders angeordnet ist. Zum einen kann man den Stößel von der Rückseite des Bodens außenseitig zum Arbeitsraum gut erreichen und damit einstellen. Des Weiteren besteht die Möglichkeit, Einstell- und Testarbeiten an der Betätigungseinrichtung ohne Stößel durchzuführen und diesen zu einem späteren Zeitpunkt zu montieren und in Arbeitsstellung zu bringen.

Eine ganz einfache Lösung zeichnet sich dadurch aus, dass der Stößel von einem Federelement gebildet wird. Die bewegliche Wandung erzeugt beim Kontakt mit dem Stößel keine Geräusche und Fertigungstoleranzen werden von dem Federelement kompensiert.

In weiterer vorteilhafter Ausgestaltung ist der Schmiermittelvorratsraum am Kolben ausgeführt. Damit kann besonders gut eine Verteilung des Schmiermittelvorrats auf die gesamte Länge des Kontaktbereichs erreicht werden, da der Schmiermittelkanal mit der Kolbenbewegung entlang dem Kontaktbereich mitgeführt wird.

Bei einer ganz besonders einfachen Variante wird mindestens eine bewegliche Wandung des Schmiermittelvorratsraums vom Kolben gebildet. Durch eine Profilierung des Kolbens und eine Profilierung des Zylinders entsteht ein Schmiermittelvorratsraum, der vom Arbeitsraum getrennt ist.

Gemäß einem vorteilhaften Unteranspruch weist der Schmiermittelvorratsraum zum Arbeitsraum eine starre Wandungen und eine Gehäusewand für die bewegliche Wandung auf, die von einem Vorspannelement beaufschlagt wird, wobei die bewegliche Wandung zum Arbeitsraum druckisoliert. Der Schmiermittelvorrat ist zwar im Arbeitsraum angeordnet, die bewegliche Wand unterliegt jedoch nicht dem Arbeitsdruck im Arbeitsraum.

Eine weitere Variante zeichnet sich dadurch aus, dass die Wandung mittels Fremdenergie bewegt wird. Mit dieser Lösung kann sehr präzise der Schmiermittelvorrat zum Kontaktbereich gefördert werden.

Dazu ist der Schmiermittelvorratsraum über mindestens einen Schmiermittelversorgungskanal an den Kontaktbereich angeschlossen.

Um ein Eindringen von Druckmedium in den Schmiermittelvorratsraum zu verhindern, ist zwischen dem Kontaktbereich und dem Schmiermittelvorratsraum ein Rückschlagventil angeordnet.

Der Schmiermittelvorratsraum ist eine Versorgungsleitung mit einem Außenbereich der Betätigungseinrichtung verbunden.

Bei einer Variante der Betätigungseinrichtung wird über die Versorgungsleitung direkt Schmiermittel zugeführt, d. h. der Schmiermittelvorratsraum kann räumlich von der Betätigungseinrichtung getrennt sein..

Eine weitere Lösung zeichnet sich dadurch aus, dass die Wandung mittels eines mit Fremdenergie betriebenen Aktuators bewegt wird. Über den Aktuator kann ggf. über eine Steuerung nach vorgegebenen Parametern Schmiermittel an den Kontaktbereich abgegeben werden.

Über die Versorgungsleitung kann nicht nur Schmiermittel transportiert werden, sondern bei einer Versorgungsleitung in der Ausführung eines Kabels auch Stellenergie zum Aktuator geführt wird.

Der Aktuator kann gemäß vorteilhaften Unteransprüchen am Kolben befestigt sein oder sich zylinderseitig abstützen.

Anstatt eines willkürlich ansteuerbaren Aktuators kann die bewegliche Wandung zumindest teilweise magnetisch ausgeführt ist und über einen Magneten eine Verstellkraft auf die bewegliche Wandung ausgeführt wird.

Eine weitere Alternativvariante sieht vor, dass der Schmiermittelvorratsraum außerhalb des mit Druckmittel gefüllten Arbeitsraums angeordnet ist.

Eine Anbaumöglichkeit wird darin gesehen, dass die Position der beweglichen Wandung des Schmiermittelvorratsraums von einem bei der Kupplungsbetätigung eine Relativbewegung zur Betätigungseinrichtung ausführenden Übertragungselement verändert wird.

Die Betätigungseinrichtung verfügt über ein taumelfähiges Lager, dass eine Relativbewegung zwischen einer Getriebeachse und einer Schwungradachse kompensiert. Deshalb ist vorgesehen, dass das Übertragungselement von einem Lager gebildet wird, das die Relativbewegung einer Kupplungskomponente zur Betätigungseinrichtung ausgleicht.

Man kann die Relativbewegung auch dadurch abgreifen, indem eine Vorspannfeder der Fahrzeugkupplung zumindest mittelbar auf die bewegliche Wandung einwirkt.

Gemäß einem vorteilhaften Unteranspruch kann der Aktuator eine temperaturabhängige Vorspannkraft auf die bewegliche Wandung ausüben. Es wird davon ausgegangen, dass eine schlecht geschmierte Betätigungseinrichtung aufgrund der höheren Reibung auch eine höhere Temperatur entwickelt. Diese Temperatursteigerung kann z. B. von einem Thermoelement genutzt werden, auf den Schmiermittelvorratsraum einwirkt.

Anhand der folgenden Figurenbeschreibung soll die Erfindung näher erläutert werden.

Es zeigt:
- Fig. 1: Prinzipdarstellung einer Betätigungseinrichtung
- Fig. 2 - 7: Schmiermittelvorrat mit wegabhängiger Betätigung
- Fig. 8 - 10: Schmiermittelvorrat mit druckabhängiger Betätigung
- Fig. 11 - 13: Schmiermittelvorrat mit interner Vorspannung
- Fig. 14: Schmiermittelvorrrat mit Ansteuerung mittels Massenträgheit
- Fig. 15 - 17: Schmiermittelvorrat mit einer Versorgungsleitung
- Fig. 18: Schmiermittelvorrat, angesteuert von einem Aktuator
- Fig. 19: Schmiermittelvorrat mit Thermo-Aktuator
- Fig. 20 - 23: Schmiermittelvorrat, angesteuert von einem Fahrzeugkupplungsteil

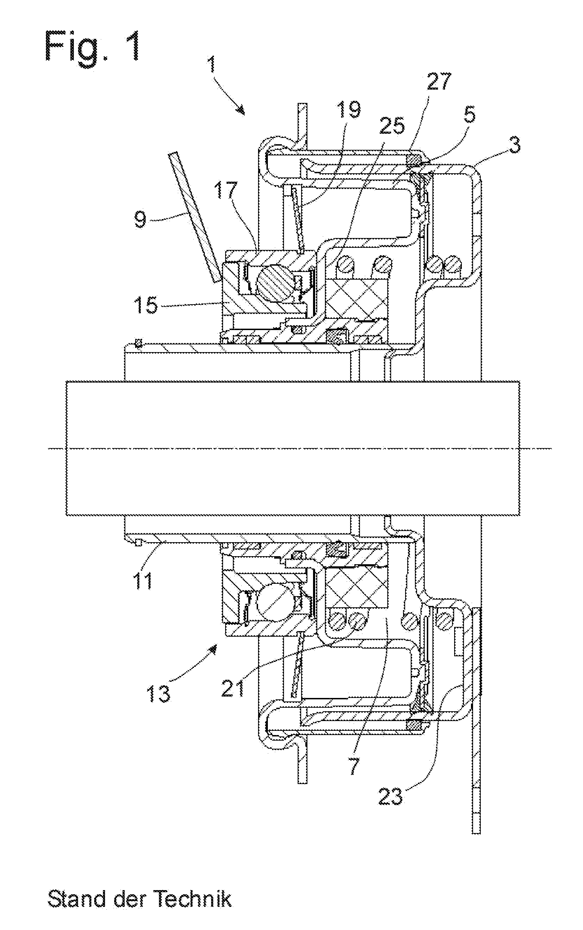

Die Figur 1 zeigt eine Schnittdarstellung durch eine Betätigungseinrichtung 1 für eine Fahrzeugkupplung. Die Betätigungseinrichtung umfasst einen mit einem Druckmedium, z. B. einem Gas oder einem hydraulischen Medium, willkürlich versorgbaren Zylinder 3, in dem ein Kolben 5 in Abhängigkeit des Füllstandes des Druckmediums in einem vom Kolben und dem Zylinder gebildeten Arbeitsraum 7 auf einer Führungshülse 11 eine axiale Betriebsbewegung ausführt, die auf eine Vorspannfeder 9 eine Öffnungskraft und/oder Schließkraft ausübt. Der Zylinder 3 ist ortsfest an einem Getriebegehäuse befestigt. Die Vorspannfeder dreht sich, da sie über ein Kupplungsgehäuse mit der Kurbelwelle eines Motors verbunden ist, stets mit der Kurbelwellendrehzahl. Deshalb ist zwischen der Vorspannfeder und dem Kolben ein Lager 13 angeordnet, das von einem Wälzlager mit einem Innenlagerring 15 und einem Außenlagerring 17 gebildet wird, die sich in Umfangsrichtung relativ zueinander verdrehen können. Der Außenlagerring wird von einer Scheibenfeder 19 gegen den Kolben gedrückt. Der Innenlagering liegt an der Vorspannfeder an. Aufgrund dieser Anordnung kann ein in Grenzen vorhandener Versatz zwischen der Vorspannfeder und dem Kolben durch eine Selbstzentrierung ausgeglichen werden.

Unabhängig von der Hublage des Kolbens 5 innerhalb des Arbeitsraums drückt eine Feder 21 den Kolben gegen den Außenlagerring 17. Die Feder stützt sich an einem Boden 23 des Zylinders und einem Kolbenboden 25 ab. Eine Abdeckhülse 27 verhindert den Eintritt von Schmutzpartikeln in den Arbeitsraum 7. Diese Abdeckhülse ist mit dem Kolben axial fest verbunden.

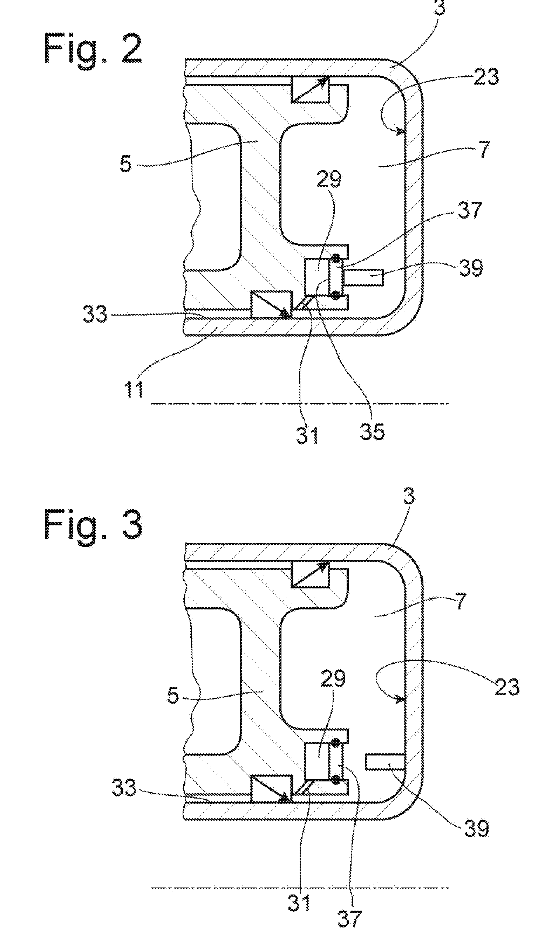

Die folgenden Prinzipdarstellungen basieren auf der Fig. 1 und beschränken sich auf die für die Erfindung wesentlichen Merkmale. Die Betätigungseinrichtung nach Fig. 2 verfügt über einen Schmiermittelvorratsraum 29, der am Kolben 5 im mit Druckmittel gefüllten Arbeitsraum 7 ausgeführt ist und über einen Schmiermittelversorgungskanal 31 einen Kontaktbereich 33 zwischen dem Kolben 5 und der Führungshülse 11 mit Schmiermittel benetzt. Der Schmiermittelvorratsraum 29 verfügt über mindestens eine bewegliche Wandung 35, die bei einer Kraftbeauschlagung Schmiermittel in den Kontaktbereich fördert. Die bewegliche Wandung wird von einer Stirnfläche eines axial beweglichen Trennkolbens 37 gebildet, der einen in Richtung des Bodens 23 weisenden Stößel 39 trägt. Der Kontaktbereich 33 wird bei der Montage der Betätigungseinrichtung mit Schmiermittel benetzt. Mit zunehmendem Verschleiß der Fahrzeugkupplung verlagert sich der Kolben 5 in seiner Grundposition bei geschlossener Kupplung immer näher in Richtung des Bodens 23. Folglich wird nach einer Betriebsdauer, in der u. U. ein nennenswerter Anteil der bei der Montage zuführten Schmiermittelmenge verbraucht ist, aus dem Schmiermittelvorratsraum zusätzliches Schmiermittel in den Kontaktbereich 33 gefördert, indem der Stößel 39 am Boden 23 anstößt und dabei den Trennkolben 37 in Richtung des Schmiermittelversorgungskanals 31 verschiebt, so dass der Trennkolben 37 und damit die bewegliche Wandung 35 in Abhängigkeit der Kolbenstellung beaufschlagt wird.

Die Fig. 3 zeigt eine Variante nach dem Prinzip der Fig. 2, bei der abweichend der Stößel 39 am Boden 23 des Zylinders angeordnet ist. Ab einer definierten Kolbenstellung drückt der Stößel 39 auf die in Richtung des Arbeitsraums 7 weisende Stirnfläche des Trennkolbens 37 und verschiebt diesen in Richtung des Schmiermittelversorgungskanals 31.

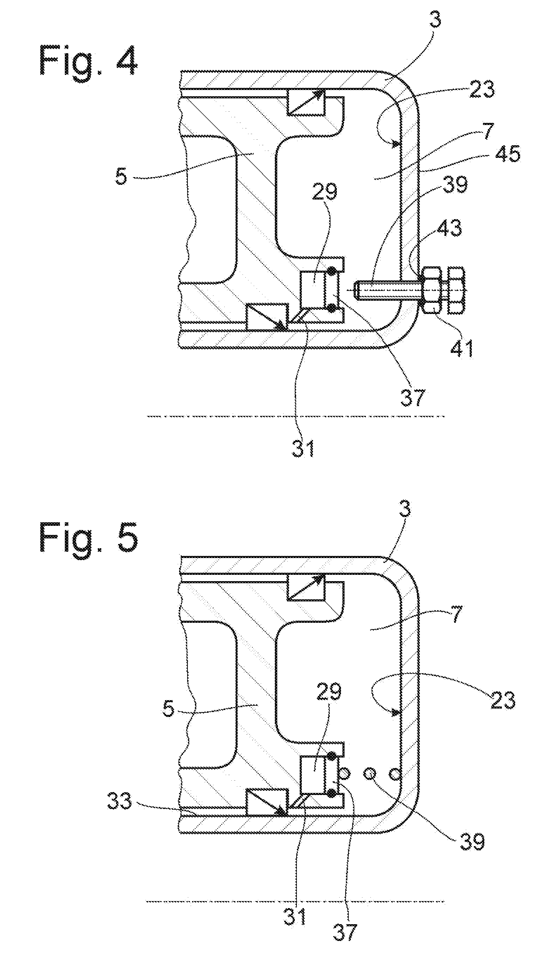

Mit der Fig. 4 wird eine Weiterentwicklung der Variante nach Fig. 3 beschrieben. Der Stößel 39 wird von einer Einstellschraube in Verbindung mit einer Kontermutter 41 gebildet. Die Einstellschraube 39 durchdringt den Boden 23 des Zylinders 3 und ist damit von außen bezogen auf den Arbeitsraum 7 einstellbar. Eine Ringdichtung 43 zwischen einer Rückwand 45 des Zylinders 3 und der Kontermutter 41 verhindert einen Druckmittelverlust aus dem Arbeitsraum 7. Beim Testbetrieb innerhalb des Montageablaufs kann die Einstellschraube 39 mit ihrer in den Arbeitsraum 7 weisenden Stirnfläche bündig mit dem Boden 23 eingestellt sein, so dass der mit Schmiermittel gefüllte Schmiermittelvorratsraum nicht aktiviert wird. Nach Ablauf des Tests lässt sich die Einstellschraube 39 in die vorbestimmte Eindringtiefe und damit Stößellänge einstellen und mittels der Kontermutter 41 sichern.

In der Fig. 5 wird ein Stößel 39 in der Bauform eines Federelements verwendet. Das Federelement 39 ist unabhängig von der Kolbenstellung stets zwischen dem Trennkolben 37 und dem Boden 23 des Zylinders 3 verspannt. Bei dieser Variante kann unter keinen Umständen ein Anschlaggeräusch beim ersten Kontakt zwischen dem Stößel und dem Trennkolben auftreten. Durch die Wahl der Federrate des Federelements 39 kann erreicht werden, dass der Trennkolben 37 erst nach einem definierten Hubweg des Kolbens 5 eine ausreichend große Verstellkraft auf den Trennkolben 37 ausübt.

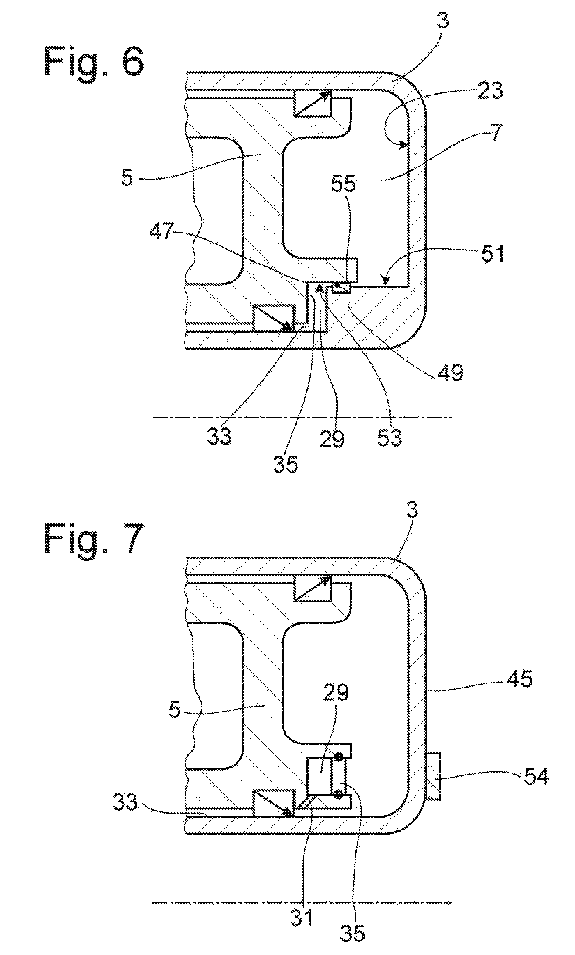

Die Variante nach Figur 6 zeigt einen Schmiermittelvorratsraum 29, der von einem in Richtung des Bodens 23 des Zylinders weisenden Absatz 47 des Kolbens 5 in Verbindung mit einem Absatz 49 am Boden 23 des Zylinders gebildet wird. Beide Absätze weisen in axialer Überdeckung verlaufende Führungsflächen 51; 53 auf, wobei die bewegliche Wandung 35 von dem kolbenseitigen Absatz 47 gebildet wird. Eine Dichtung 55 in einer der Führungsflächen 51; 53 verhindert den Schmiermittelaustritt in den Arbeitsraum 7. Auf einen Schmiermittelkanal 31 kann verzichtet werden, da der Schmiermittelvorratsraum 29 direkt an den Kontaktbereich 31 angrenzt.

Die Betätigungseinrichtung entsprechend der Fig. 7 zeigt eine bewegliche Wandung 35 in einer umlaufenden Nut des Kolbens 5, wobei die Nut und die Wandung 35 den Schmiermittelvorratsraum 29 bilden. Die Wandung ist zumindest partiell magnetisch ausgeführt. Am Boden 23 oder an der Rückwandung 45 ist ein zur Wandung gleichpoliger Magnet 54 befestigt, der eine Abstoßkraft auf die Wandung 35 ausübt und damit zwar eine von der Kolbenstellung abhängige Schmiermittelförderung bewirkt, jedoch kein direkter Kontakt zur Wandung 35 vorliegen muss.

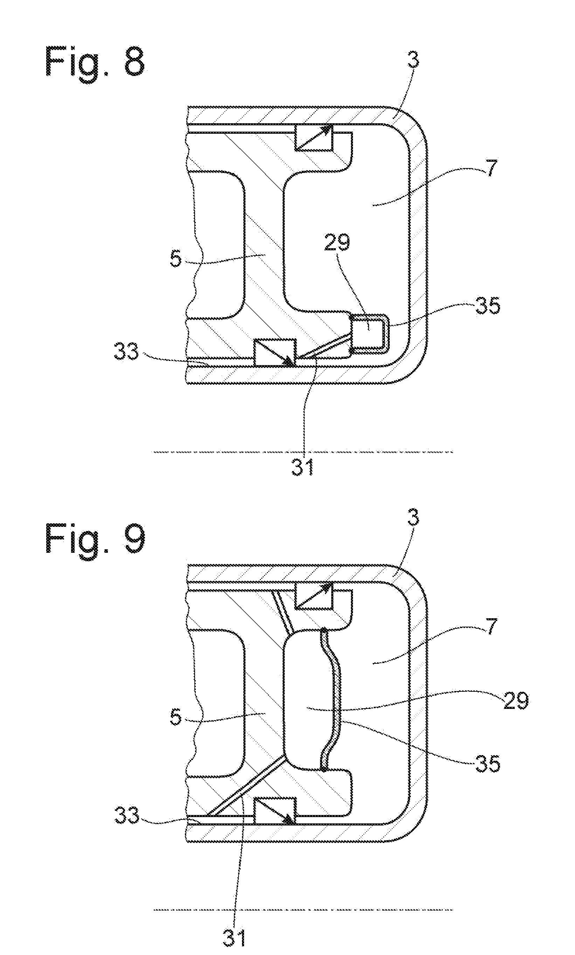

Mit den Figuren 8 bis 10 soll verdeutlicht werden, dass die Ansteuerung des Schmiermittelvorratsraums 29 nicht nur von der Kolbenstellung, sondern auch vom Druck im Arbeitsraum 7 abhängig sein kann. Ein weiterer wesentlicher Unterschied zu den vorangegangenen Varianten besteht zusätzlich darin, dass die Wandung 35 in den Varianten nach den Fig. 8 und 9 elastisch ausgeführt ist, indem eine Membran verwendet wird. Die elastische Wandung 35 ist am Kolben fixiert, wobei der einzige Unterschied zwischen den Figuren 8 und 9 in den Anbindungsbereichen am Kolben 5 besteht. Der Druck im Arbeitsraum 7 wirkt auf die elastische Wandung und spannt diese in Richtung des Kolbens vor, so dass permanent ein Druck auf den Schmiermittelvorrat ausgeübt wird, der sich über den Schmiermittelversorgungskanal 31 in Richtung der Kontaktfläche 33 ausbreiten kann.

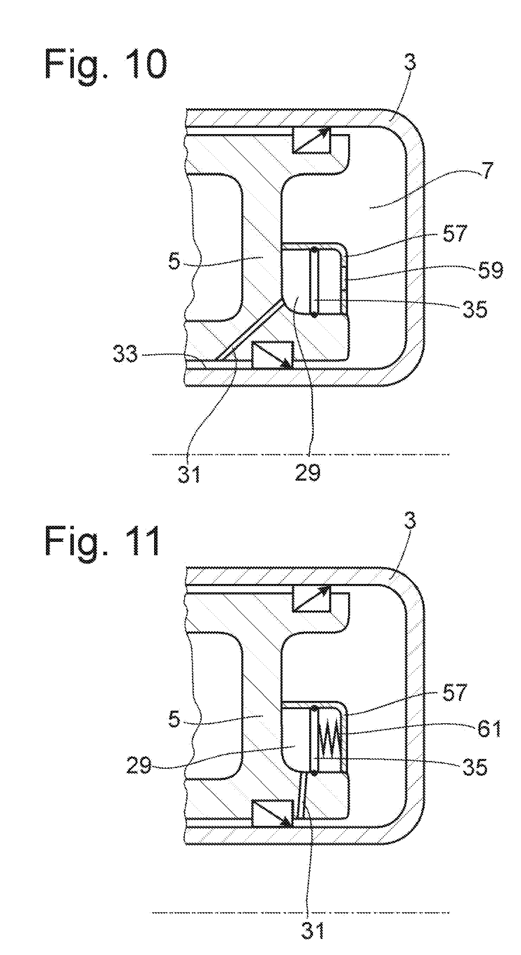

In Fig. 10 wird der Schmiermittelvorratsraum 29 vom Kolben 5 und einem Winkelring 57 am Kolben 5 gebildet. In dem Winkelring 57 ist eine Drosselöffnung 59 ausgeführt, die den auf die bewegliche Wandung 35 wirkenden Druck aus dem Arbeitsraum 7 auf ein gewünschtes Maß mindert.

Abgesehen von der Lösung nach der Fig. 6 spielt bei den bisher beschriebenen Varianten der Druck im Arbeitsraum 7 eine gewisse Rolle. Auch bei einer Trennwand 35, die von einem Stößel 37 betätigt wird, wirkt der Druck im Arbeitsraum auf die Trennwand 35. Bei den Konstruktionen nach den Fig. 11 bis 14 wird ein Winkelring 57 verwendet, die als Gehäusewand er eine starre Wandung darstellt, die zum Arbeitsraum 7 druckisoliert ist. Innerhalb der Gehäusewand wird bewegliche Wandung 35 von einem Vorspannelement 61 beaufschlagt.

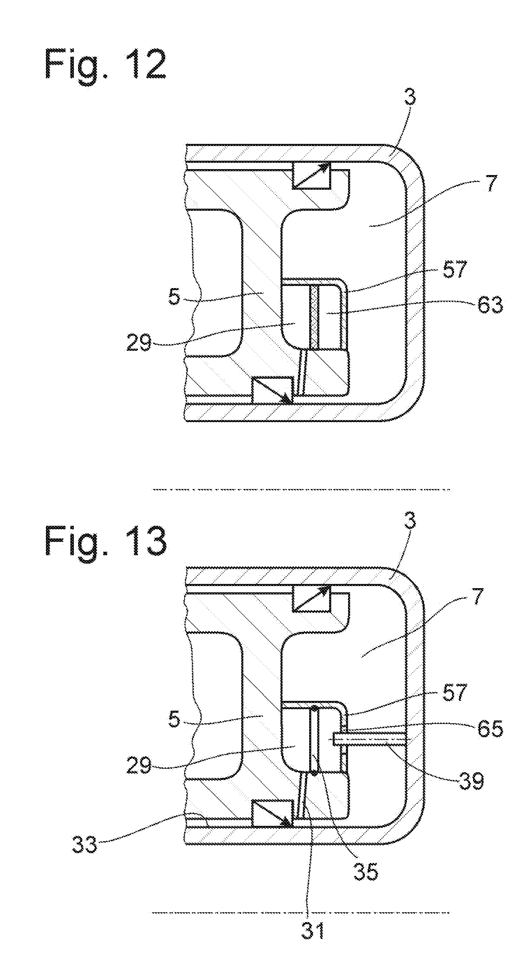

Sehr ähnlich funktioniert die Lösung nach Fig. 12, bei der die bewegliche Trennwand 35 im Winkelring 57 fixiert ist und den Schmiermittelvorratsraum 29 von einem Gasvorspannraum 63 trennt, dessen Druckniveau abweichend zum Druckniveau im Arbeitsraum ist. Ein Vorteil besteht darin, dass das Druckniveau im Gasvorspannraum 63 wie auch die Vorspannkraft des Vorspannelements sehr konstant sind.

Das Ausführungsbeispiel nach Fig. 13 ähnelt zwar der Figur 3, jedoch ist die Durchgangsöffnung 65 im Winkelring 57 wie bereits erwähnt, zum Arbeitsraum 7 druckisoliert.

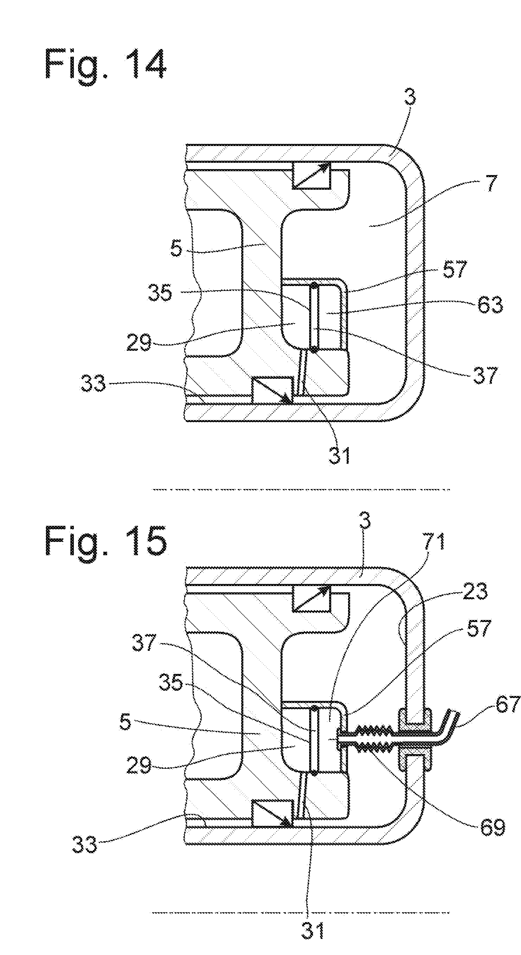

Die Variante nach Fig. 14 ist sehr ähnlich der nach Figur 11. Abweichend wird kein Vorspannelement 61 verwendet, sondern eine bewegliche Wandung 35 an einem Trennkolben 37, dessen Massenträgheitsmoment zur pulsierenden Förderung des Schmiermittels verwendet wird.

Bei den Ausführungen nach den Fig. 15 bis 18 wird die Kontaktfläche 33 aktiv mittels Fremdenergie mit Schmiermittel versorgt. In der Fig. 15 steht eine Versorgungsleitung 67 zur Verfügung, die den Boden 23 des Zylinders 3 durchdringt und bis in das vom Winkelring 57 gebildete Gehäuse reicht, wobei ein Abschnitt 69 zwischen dem Winkelring und dem Boden 23 längenveränderlich ausgeführt ist. Der Trennkolben 37 separiert den Schmiermittelvorratsraum 29 von einem Vorspannraum, der mit einem gas- oder flüssigen Druckmittel über die Versorgungsleitung gefüllt wird und damit eine vom Druck im Arbeitsraum 7 unabhängige Benetzung der Kontaktfläche 33 sicherstellt.

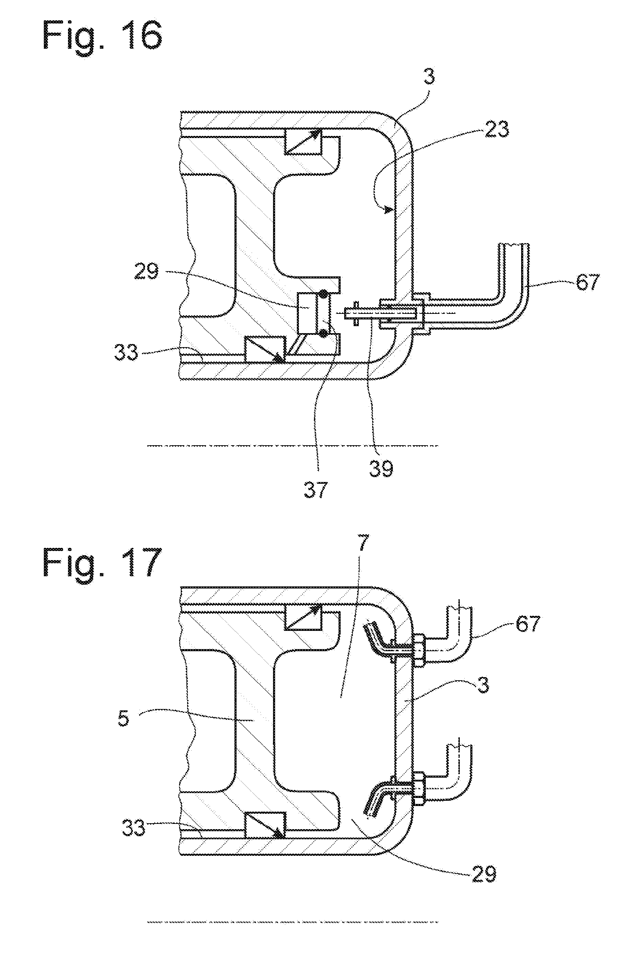

Die Fig. 16 zeigt einen Stößel 39 als einen sich zylinderseitig abstützenden Aktuator, der im Boden 23 des Zylinders 3 axial beweglich gelagert ist und dessen Rückseite über die Versorgungsleitung 67 mittels Fremdenergie mit Druckmittel beaufschlagt werden kann, um den Trennkolben 37 am Schmiermittelvorratsraum 29 weiter zu bewegen.

In der Variante nach Fig. 17 wird der Schmiermittel über die Versorgungsleitung 67 über einen Außenbereich der Betätigungseinrichtung direkt zum Kontaktbereich 33 zugeführt. Damit bildet ein Teil des Arbeitsraums 7 zugleich den Schmiermittelvorratsraum, der über die Versorgungsleitung 67 nachgefüllt wird.

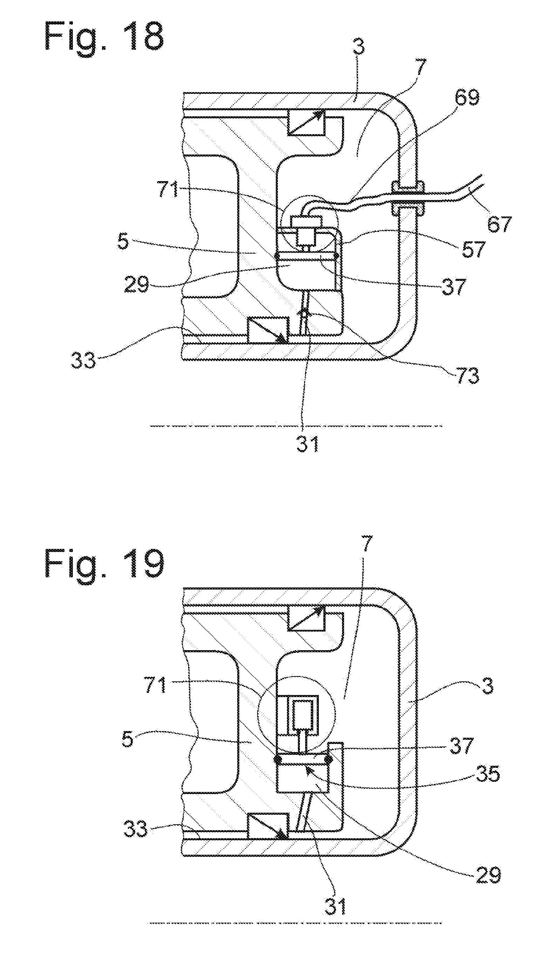

Ein Aktuator 71 in der Fig. 18 bekommt Stellenergie, z. B. elektrischen Strom, über die Versorgungsleitung 67 zugeführt und ist am kolbenseitigen Gehäuse bzw. Winkelring 57 angeordnet. Der Aktuator 71 bewegt den Trennkolben 37 und spannt den Schmiermittelvorratsraum 29 vor. Bei allen Varianten, die einen Schmiermittelversorgungskanal 31 aufweisen, kann ein Rückschlagventil 73 zwischen dem Kontaktbereich 33 und dem Schmiermittelvorratsraum 29 verwendet werden, so dass eine Rückflussbewegung des Schmiermittels, z. B. aufgrund des Drucks im Arbeitsraum 7, in den Schmiermittelversorgungsraum 29 verhindert.

Die Figur 19 zeigt eine dem Prinzip der Fig. 18 folgende Aktuatoranordnung. Abweichend wird der Aktuator 71 jedoch nicht mittels Fremdenergie betrieben, sondern z. B. von einem Wachs-Thermo-Element gebildet, das eine temperaturabhängige Vorspannkraft auf die bewegliche Wandung 35 ausübt.

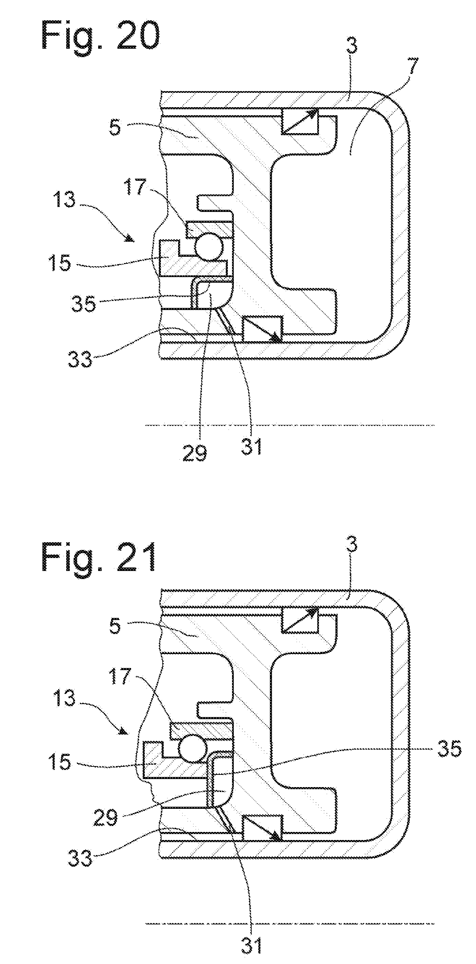

Bei den bisher beschriebenen Varianten befindet sich der Schmiermittelvorratsraum 29 stets innerhalb des Arbeitsraums 7, entweder am Kolben 5 oder am Zylinder 3. Die Lösungen nach den Figuren 20 bis 22 zeigen Varianten, bei denen der Schmiermittelvorratsraum 29 außerhalb des mit Druckmittel gefüllten Arbeitsraums 7 angeordnet ist. Dabei wird ein bei der Kupplungsbetätigung eine Relativbewegung zur Betätigungseinrichtung, d. h. Kolben 5 und Zylinder 3, ausführendes Übertragungselement ausgenutzt.

Das Übertragungselement in den Fig. 20; 21 wird von dem Lager 13 gebildet, dessen Innenring 15 als Relativbewegung zur Betätigungseinrichtung eine radiale Taumelbewegung zum Außenring 17 ausführen kann. Der Innenring 13 wirkt durch direkten Kontakt auf die bewegliche Wandung 35 ein und pumpt damit Schmiermittel aus dem Schmiermittelvorratsraum 29 in den Schmiermittelversorgungskanal. 31. Der Unterschied zwischen den Fig. 20 und 21 besteht darin, dass der Innenring in Fig. 20 radial, in Fig. 21 axial auf die Wandung 35 drückt.

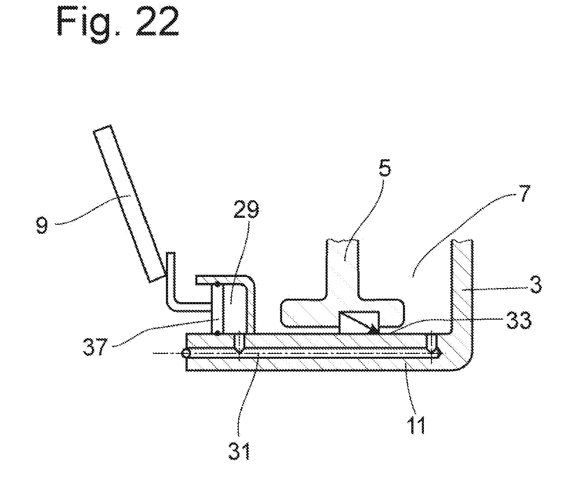

In der Fig. 22 ist der Schmiermittelvorratsraum 29 ortsfest zur Führungshülse 11 fixiert. Die bewegliche Wandung 35 ist Teil eines Trennkolbens 37, der von der als Vorspannfeder 9 der Fahrzeugkupplung beaufschlagt wird.

## Patentansprüche

1. Betätigungseinrichtung (1), insbesondere für eine Fahrzeugkupplung, umfassend einen Zylinder (3), in dem ein Kolben (5) in Abhängigkeit einer Druckmittelversorgung eine Betriebsbewegung ausführt, wobei zumindest ein Kontaktbereich (33) zwischen dem Zylinder (3) und dem Kolben (5) mit einer reibkraftreduzierenden Schmiermittelbeigabe versehen ist,
**dadurch gekennzeichnet,**
**dass** der Kontaktbereich (33) an einen Schmiermittelvorratsraum (29) angeschlossen ist, über den der Kontaktbereich (33) mit Schmiermittel versorgbar ist.

2. Betätigungseinrichtung nach Anspruch 1,
**dadurch gekennzeichnet,**
**dass** der Schmiermittelvorratsraum (29) mindestens eine bewegliche Wandung (35) aufweist, die bei einer Kraftbeaufschlagung Schmiermittel in den Kontaktbereich (33) fördert.

3. Betätigungseinrichtung nach Anspruch 2,
**dadurch gekennzeichnet,**
**dass** die Wandung (35) elastisch ausgeführt ist.

4. Betätigungseinrichtung nach Anspruch 2,
**dadurch gekennzeichnet,**
**dass** die Wandung (35) von einem Trennkolben (37) gebildet wird.

5. Betätigungseinrichtung nach Anspruch 2,
**dadurch gekennzeichnet,**
**dass** die Wandung (35) in Abhängigkeit der Kolbenstellung beaufschlagt wird.

6. Betätigungseinrichtung nach Anspruch 1,
**dadurch gekennzeichnet,**
**dass** der Schmiermittelvorratsraum (29) in einem mit Druckmittel gefüllten Arbeitsraum (7) angeordnet ist.

7. Betätigungseinrichtung nach Anspruch 5,
**dadurch gekennzeichnet,**
**dass** der Zylinder (3) mit einem Stößel (39) ausgeführt ist, der auf die Wandung (35) einwirkt.

8. Betätigungseinrichtung nach Anspruch 7,
**dadurch gekennzeichnet,**
**dass** der Stößel (39) in seinem Einsatzpunkt einstellbar ist.

9. Betätigungseinrichtung nach Anspruch 5,
**dadurch gekennzeichnet,**
**dass** der Stößel (39) an einem Boden (23) des Zylinders (3) angeordnet ist.

10. Betätigungseinrichtung nach Anspruch 5,
**dadurch gekennzeichnet,**
**dass** der Stößel (39) von einem Federelement gebildet wird

11. Betätigungseinrichtung nach Anspruch 1,
**dadurch gekennzeichnet,**
**dass** der Schmiermittelvorratsraum (29) am Kolben (5) ausgeführt ist.

12. Betätigungseinrichtung nach Anspruch 6,
**dadurch gekennzeichnet,**
**dass** mindestens eine bewegliche Wandung (35) des Schmiermittelvorratsraums vom Kolben (5) gebildet wird.

13. Betätigungseinrichtung nach Anspruch 6,
**dadurch gekennzeichnet,**
**dass** der Schmiermittelvorratsraum (29) zum Arbeitsraum (7) eine starre Wandung und eine Gehäusewand (57) für die bewegliche Wandung (35) aufweist, die von einem Vorspannelement beaufschlagt wird, wobei die bewegliche Wandung (35) zum Arbeitsraum (9) druckisoliert.

14. Betätigungseinrichtung nach Anspruch 1,
**dadurch gekennzeichnet,**
**dass** der Schmiermittelvorratsraum (29) über mindestens einen Schmiermittelversorgungskanal (31) an den Kontaktbereich (33) angeschlossen ist.

15. Betätigungseinrichtung nach Anspruch 14,
**dadurch gekennzeichnet,**
**dass** zwischen dem Kontaktbereich (33) und dem Schmiermittelvorratsraum (29) ein Rückschlagventil (73) angeordnet ist.

16. Betätigungseinrichtung nach Anspruch 2
**dadurch gekennzeichnet,**
**dass** die Wandung (35) mittels Fremdenergie bewegt wird.

17. Betätigungseinrichtung nach Anspruch 16,
**dadurch gekennzeichnet,**
**dass** der Schmiermittelvorratsraum (29) über eine Versorgungsleitung (67) mit einem Außenbereich der Betätigungseinrichtung (1) verbunden ist.

18. Betätigungseinrichtung nach Anspruch 17,
**dadurch gekennzeichnet,**
**dass** der Betätigungseinrichtung (1) über die Versorgungsleitung (67) Schmiermittel zugeführt wird.

19. Betätigungseinrichtung nach Anspruch 16,
**dadurch gekennzeichnet,**
**dass** die Wandung (35) mittels eines mit Fremdenergie betriebenen Aktuators (69) bewegt wird.

20. Betätigungseinrichtung nach Anspruch 19,
**dadurch gekennzeichnet,**
**dass** über die Versorgungsleitung (67) Stellenergie zum Aktuator (69) geführt wird.

21. Betätigungseinrichtung nach Anspruch 19,
**dadurch gekennzeichnet,**
**dass** sich der Aktuator (69) zylinderseitig abstützt.

22. Betätigungseinrichtung nach Anspruch 5,
**dadurch gekennzeichnet,**
**dass** die bewegliche Wandung (35) zumindest teilweise magnetisch ausgeführt ist und über einen Magneten (54) eine Verstellkraft auf die bewegliche Wandung (35) ausgeführt wird.

23. Betätigungseinrichtung nach Anspruch 1,
**dadurch gekennzeichnet,**
**dass** der Schmiermittelvorratsraum (29) außerhalb des mit Druckmittel gefüllten Arbeitsraums (7) angeordnet ist.

24. Betätigungseinrichtung nach Anspruch 23,
**dadurch gekennzeichnet,**
**dass** die Position der beweglichen Wandung (35) des Schmiermittelvorratsraums (29) von einem bei der Kupplungsbetätigung eine Relativbewegung zur Betätigungseinrichtung ausführenden Übertragungselement (9; 13) verändert wird.

25. Betätigungseinrichtung nach Anspruch 24,
**dadurch gekennzeichnet,**
**dass** das Übertragungselement von einem Lager (13) gebildet wird, das die Relativbewegung einer Kupplungskomponente zur Betätigungseinrichtung (1) ausgleicht.

26. Betätigungseinrichtung nach Anspruch 23,
**dadurch gekennzeichnet,**
**dass** eine Vorspannfeder (9) der Fahrzeugkupplung zumindest mittelbar auf die bewegliche Wandung (35) einwirkt.

27. Betätigungseinrichtung nach einem der Ansprüche 1 - 26,
**dadurch gekennzeichnet,**
**dass** der Aktuator (71) eine temperaturabhängige Vorspannkraft auf die bewegliche Wandung (35) ausübt.
